# EUROPEAN PATENT APPLICATION

(11) **EP 0 604 162 A1**
(43) Date of publication of application: **29.06.1994**
(21) Application number: 93310309.5
(22) Date of filing: 20.12.1993
(51) Int. Cl.: F16K 31/44

(54) **Trigger-operated valve**

(30) Priority: 21.12.1992 GB 9226629
(71) Applicant: DESOUTTER, LIMITED, Colindale London NW9 6ND (GB)
(72) Inventor: Prickett, Leslie Roy, Stevenage, Hertfordshire SG2 8PE (GB); Dudden, Christopher John, Boscombe, Bournemouth Dorset BH5 2DU (GB); Butchard, Andrew, Pasteur Close, Colindale, London NW9 5HN (GB)
(74) Representative: Godwin, Edgar James

(57) **Abstract**

A manually operable trigger (7), e.g. on an air-powered tool, is movable from a rest position (Fig. 1) to an active position (Fig. 2) and is urged to the rest position. A valve element (12), for controlling the flow of fluid under pressure along a passage (2), is moved to an open position (Fig. 2) in response to movement of the trigger (7) to the active position. The pressure of the fluid in the passage (2) is communicated to the trigger (7) (at least when the valve element (12) is in the open position) so as to assist in maintaining the trigger (7) in the active position.

## Description

This invention relates to a manually operable valve and in particular, but not solely, to a valve for controlling the supply of a gas or liquid under pressure to a fluid motor, e.g. in a power tool.

In particular, the invention concerns a manually operable valve comprising a passage for carrying fluid under pressure, a valve element for controlling fluid flow along the passage, a manually operable trigger movable from a rest position to an active position, return means for urging the trigger to the rest position, and means for moving the valve element to an open position in response to movement of the trigger to the active position, so as to allow fluid flow along the passage.

The trigger may comprise a push-button pressed by the operator's finger, for example, or a lever gripped by the operator's hand. If the valve has to be kept open for a relatively long time, the effort required to keep the trigger in the active position will eventually cause the operator to suffer from fatigue.

The present invention provides the valve with means for communicating the pressure of the fluid in the passage to the trigger, at least when the valve element is in the open position, so as to assist in maintaining the trigger in the active position.

Preferably the trigger includes a stem carrying a piston which runs in a cylinder, the piston dividing the interior of the cylinder into a high-pressure region, which communicates with the passage, and a low-pressure region, which communicates with an exhaust. Preferably the high-pressure region communicates with the passage via a passageway in the stem.

The invention will be described further, by way of example, with reference to the accompanying drawings, in which:
Figure 1 is a fragmentary sectional view of a first embodiment of a manually operable valve in an air-powered tool, with the valve closed;
Figure 2 is similar to Figure 1, but with the valve open;
Figure 3 is a fragmentary sectional view of a second embodiment, with the valve closed;
Figure 4 is a similar view to Figure 3, with the valve open; and
Figure 5 is a fragmentary sectional view of a third embodiment, with the valve closed.

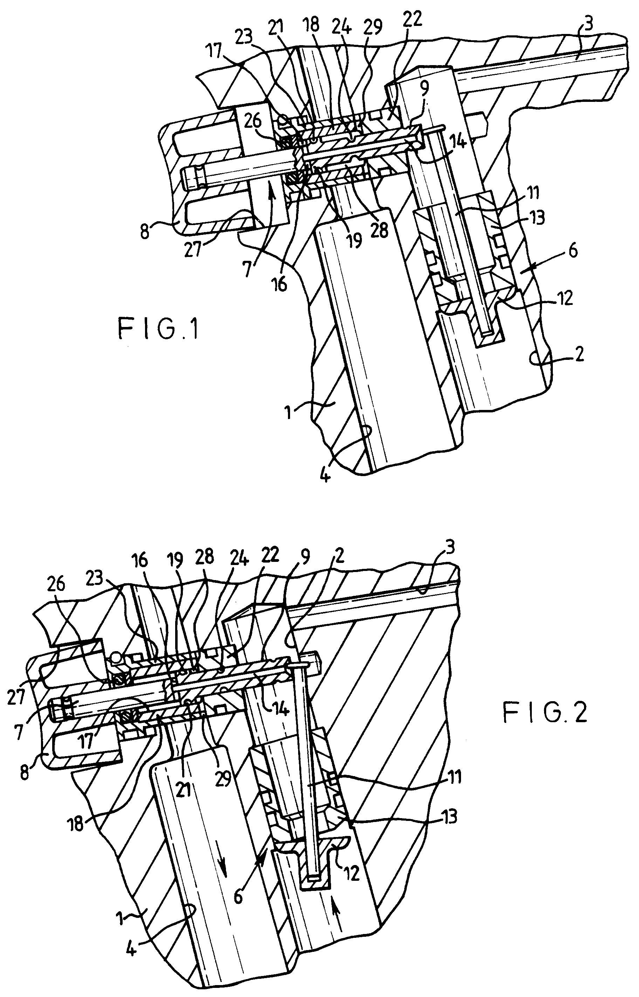

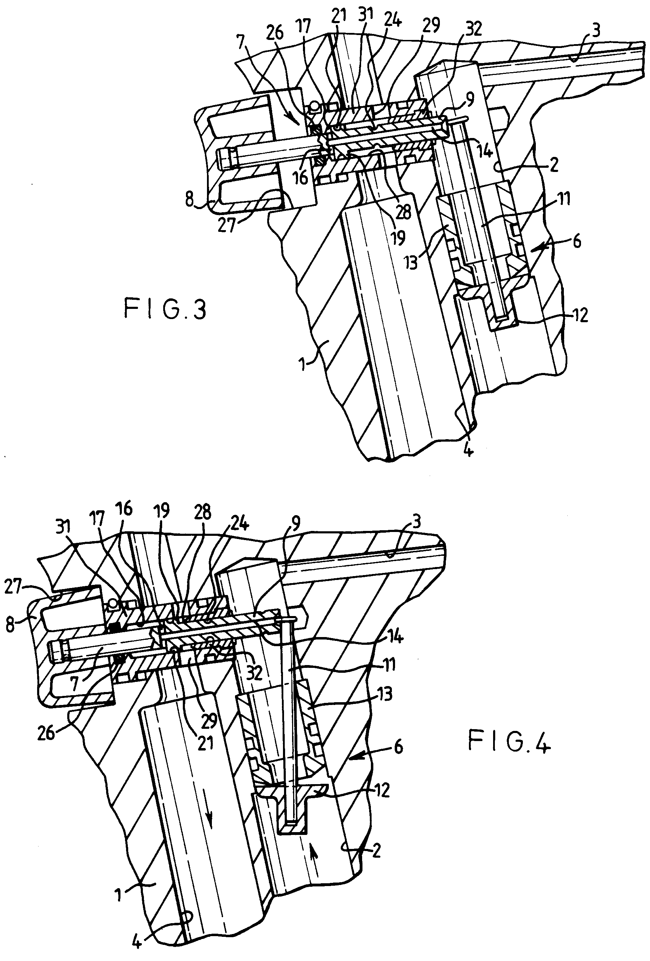

Referring first to Figures 1 and 2, it can be seen that the handle 1 of the power tool has a compressed air inlet passage 2, leading to an air motor (not shown) via a branch duct 3, and an exhaust passage 4 through which the low-pressure air coming from the output of the motor passes to the atmosphere via an oil filter and/or a silencing medium (not shown). The inlet passage 2 which includes a valve assembly 6 in the form of a tilt valve, by way of example only, since other types of valve assembly could be used. The valve assembly 6 is actuated by a trigger 7 comprising a push-button 8 fitted on one end of a longitudinally movable stem 9.

When the push-button 8 is depressed by the operator, the trigger 7 moves from the rest position (Fig. 1) to an active position (Fig. 2) in which the stem 9 pushes out of axial alignment with the inlet passage 2 a valve-operating rod 11 which is fixed to a valve element 12. The resultant tilting of the element 12 uncovers a valve bush 13 in the passage 2, thereby allowing high-pressure air to flow through the passage 2. Downstream of the valve assembly 6 the high-pressure air now flowing through the passage 2 enters a passageway comprising an axial bore 14 and a transverse bore 16, in the stem 9, communicating with a high-pressure region 17 in a cylindrical liner 18. The air pressure in the region 17 acts on a piston 19 integrally formed on the stem 9, thereby assisting the maintenance of the trigger 7 in the active position (Fig. 2).

The piston 19 has an optional peripheral groove 21 for receiving an optional sealing device (not shown). The cylindrical liner 18 is mounted between an inner bush 22 and an outer bush 23, through which the stem 9 slides. The piston 19 separates the high-pressure region 17 from a low-pressure region 28 which communicates with the exhaust passage 4 via passageways 29 formed in the ends of the liner 18 and outer bush 23. The stem 9 has an optional peripheral groove 24 for receiving an optional sealing device (not shown) which is to cooperate with the inner bush 22 when the trigger 7 is in the active position. In the outer bush 23 the stem passes through an optional seal 26. The push-button 8 is received and guided by a recess 27 in the handle 1.

When the operator releases the push-button 8, the trigger 7 returns to the rest position and the valve element 12 returns to the closed position. The return of the trigger to the rest position may be caused by air pressure acting on the valve element 12 and/or load of a spring (not shown) acting on the valve element and/or load of an optional compression spring (not shown) fitted over the stem 9 in the low-pressure region 28 and acting between the piston 19 and the inner bush 22. It will therefore be seen that, when the trigger is operated, the operator will experience an initial relatively high resistance to depression of the push-button 8, so that during a first stage of depression of the button it will be necessary to apply a relatively high load (depending on the air pressure and spring load acting on the valve element 12), followed by a relatively low resistance to depression, so that during a second servo-assisted stage of depression it will only be necessary to apply a relatively low load (depending on the effective area of the piston 19). The initial resistance inhibits accidental operation and can therefore serve as a safety feature.

The second embodiment, shown in Figures 3 and 4, is similar to the first embodiment except that the cylindrical liner and the inner and outer bushes are replaced by a hollow-cylindrical body 31 and an insert 32.

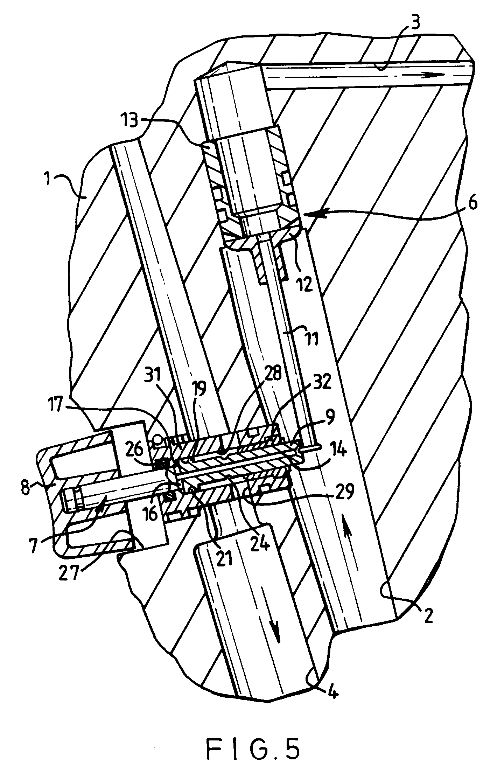

The third embodiment, shown in Figure 5, is similar to the second embodiment except that the trigger 7 is mounted upstream of the valve assembly 6 and is therefore servo-assisted as soon as pressure is supplied to the inlet passage 2.

Various modifications may be made within the scope of the invention. For example, the rod 11 could be replaced by another mechanical linkage or even by electrical relays. The pressure in the passage 2 could be communicated to the high-pressure region 17 through a passageway separate from the stem 9. The low-pressure region 28 could communicate with the ambient atmosphere rather than with the exhaust passage 4. The push-button 8 could be replaced by a lever pressing against the end of the stem 9.

## Claims

1. A manually operable valve comprising a passage (2) for carrying fluid under pressure, a valve element (12) for controlling fluid flow along the passage (2), a manually operable trigger (7) movable from a rest position to an active position, return means for urging the trigger (7) to the rest position, and means (11) for moving the valve element (12) to an open position in response to movement of the trigger (7) to the active position, so as to allow fluid flow along the passage (2), characterised by means (14,16) for communicating the pressure of the fluid in the passage (2) to the trigger (7), at least when the valve element (12) is in the open position, so as to assist in maintaining the trigger (7) in the active position.

2. A valve as claimed in claim 1, in which the trigger (7) includes a stem (9) carrying a piston (19) which runs in a cylinder (18;31), the piston (19) dividing the interior of the cylinder (18;31) into a high-pressure region (17), which communicates with the passage (2), and a low-pressure region (28).

3. A valve as claimed in claim 2, in which the low-pressure region (28) communicates with an exhaust (4).

4. A valve as claimed in claim 2 or 3, in which the high-pressure region (17) communicates with the passageway (2) via a passageway (14) in the stem (9).

5. A valve as claimed in any of claims 2 to 4, in which the high-pressure region (17) communicates with the passage (2) downstream of the valve element (12).

6. A hand-held power tool driven by compressed air, the tool incorporating a manually operable valve according to any of claims 1 to 5.
